# EUROPEAN PATENT SPECIFICATION

(11) **EP 3 206 043 B1**
(45) Date of publication and mention of the grant of the patent: **08.05.2019**
(21) Application number: 17153372.2
(22) Date of filing: 26.01.2017
(51) Int. Cl.: G01S 5/02

(54) **INDOOR LOCATION SYSTEM**
INNENORTUNGSSYSTEM
SYSTÈME DE LOCALISATION INTÉRIEURE

(30) Priority: 09.02.2016 GB 201602315
(43) Date of publication of application: 16.08.2017
(60) Divisional application: 19165144.7
(73) Proprietor: AeroScout Ltd, 7403635 Ness-Ziona (IL)
(72) Inventor: AMSALEM, Reuven, Ness Ziona (IL); TSRUYA, Shalom, Rishon Letzion (IL); RAZ, Niv, Holon (IL); ALJADEFF, Daniel, IL Kiriat Ono (IL)
(74) Representative: SBD IPAdmin

(56) References cited:
- WO-A1-2007/067592
- WO-A1-2007/070103
- US-B1- 6 529 164

## Description

The present invention relates to location systems, especially to so-called real time locations systems (RTLS), in which wireless mobile devices such as tags, transponders and/or mobile communications devices are located, and preferably tracked, by means of wireless signal transmissions. The invention particularly relates to indoor location systems, i.e. location systems arranged to locate mobile devices within buildings.

Such location systems are used for locating, and preferably tracking, articles and/or people associated with respective wireless mobile devices. Location systems are used in a wide range of environments, including hospitals and other healthcare situations, social care environments, prisons, industrial locations, warehouses, retail stores, educational institutions, offices and logistics environments, for example. Such systems are used for locating and tracking patients (especially babies and the elderly) and other categories of people, and for locating and tracking medical supplies, equipment, products, tools and other categories of articles.

Location systems use one or more of a variety of wireless technologies, including: wireless local area network (WLAN) technologies; wireless personal area network (WPAN) technologies (including low-rate wireless personal area network (LR-WPAN) technologies); radio frequency identification (RFID); ultra-wideband (UWB); ultrasound; sound; infrared; visible light; camera vision, etc. Included in WLAN technologies are those conforming to the Institute of Electrical and Electronics Engineers (IEEE) 802.11 series of standards (e.g. Wi-Fi (TM)). Included in WPAN and LR-WPAN technologies are those conforming to the IEEE 802.15 series of standards (e.g. Bluetooth (TM), ZigBee (TM), etc.).

The wireless mobile devices which are located and tracked in location systems may, for example, be tags, transponders or mobile communications and/or computer devices, and they may be active and/or passive. For example, active wireless mobile devices may function as "beacons" which periodically emit wireless signals indicating their presence. Passive wireless mobile devices may, for example, function as transponders, only emitting wireless signals in response to wireless signals emitted by wireless emitters of the location system. Some wireless mobile devices may function sometimes as passive devices and at other times as active devices. Depending upon their functionality, the wireless mobile devices may be self-powered (e.g. battery powered) or may obtain their power from the wireless signals emitted by wireless emitters of the location system. Mobile communications devices used in location systems include, for example: mobile (e.g. cellular) telephones, including smart phones; portable computer devices, e.g. tablet computers, laptop computers, handheld computers, personal digital assistants (PDAs), GPS devices; etc.

As the skilled person knows, location systems use a variety of techniques for calculating the locations of wireless mobile devices. For example, some location systems use the times at which wireless transmissions from wireless mobile devices are received (i.e. time-of-arrival (TOA) information), for example in order to calculate differences in times-of-arrival between different wireless receivers and to use the calculated time-difference-of-arrival (TDOA) information to calculate the locations of the wireless mobile devices. Alternatively, other location systems use the times at which wireless transmissions from wireless transmitters are received (i.e. time-of-arrival (TOA) information) at a wireless mobile device, for example in order to calculate differences in times-of-arrival between different wireless transmitters and to use the calculated time-difference-of-arrival (TDOA) information to calculate the location of the wireless mobile device. Additionally or alternatively, location systems may use received signal strengths (e.g. received signal strength indication, RSSI), and/or angle of arrival (AOA) information, and/or round-trip time (RTT) information, radio map fingerprinting information, location information from nearby tags/transponders, satellite location information, etc. Additionally or alternatively, in some location systems the wireless mobile devices themselves perform at least part of the location calculations.

Each of US 6,529,164 and WO 2007/070103 discloses an indoor location system according to the preamble of Claim 1. In the system of US 6,529,164, the system is initially set up by charting and tabulating beacon signal strengths for each room, and by tabulating normal travel times between rooms. During use of the system, the beacons which produce the highest RSSI values are identified, and the beacon RSSI values are compared with the pre-tabulated values in order to try to identify the room in which a mobile transceiver is located. If two or more different locations are possible, then the beacon reception times are compared with the pre-tabulated travel times to determine the most likely location of the mobile transceiver. In the system of WO 2007/070103, the locations of the beacons are pre-determined, and during use of the system, signal strengths of beacon signals received by a mobile tag are measured. If the strongest beacon signal exceeds a pre-determined first threshold value, the tag is determined to be within that beacon's area, e.g. room. The first threshold value is pre-determined from the expected signal strength from a beacon in a typical size room to an unobstructed tag in that same typical size room (or other area where the beacon is located). If the highest beacon signal strengths are below the first threshold value but above a pre-determined second threshold value, then triangulation is used in order to try to determine the location of the tag. The second threshold value is pre-determined from the expected signal strength from a beacon in a typical adjacent room to an unobstructed tag in an adjoining room. A confidence level of determined location may be calculated, and a weighting based on relative signal strengths may be used in the triangulation calculation.

WO 2007/067592 discloses an indoor location system according to the preamble of Claim 2. In the system of WO 2007/067592, the system is initially set up by accurately mapping the locations of all of the fixed wireless receivers, and during use of the system the received signal strength at each receiver, of a beaconing signal emitted by a mobile beaconing device, is measured. The location of the mobile beaconing device is determined based on the strongest signal strength, for example by simply determining that the beaconing device is closest to the receiver that reports the strongest signal strength, or if a more accurate location is required, by triangulation and using an error reduction algorithm, optionally also using the times of receipt of the beaconing signal.

A problem associated with known indoor location systems is how to determine which room of a building a particular wireless mobile device is located in - i.e. room discrimination. (By a "room" is meant an area of a building separated from other areas of the building by one or more internal walls, and by one or more floors/ceilings if the building has more than a single storey. Corridors, hallways, vestibules, stairwells, etc. are thus regarded as being "rooms" herein.) This is problematic for radio frequency (RF) location systems, because the radio frequency signals normally propagate through the internal walls, floors and ceilings in a building. For this reason, other technologies, such as ultra sound or infrared, are used for room discrimination. However, the use of non-radio frequency technologies in conjunction with radio frequency systems can add cost and complexity to the location system.

There is therefore a need for an indoor location system which enables radio frequency room discrimination.

In a first aspect, the present invention provides an indoor location system according to Claim 1.

A second aspect of the invention provides an indoor location system according to Claim 2.

The invention can entail a method of locating a mobile device in a building by means of an indoor location system according to the first aspect of the invention, the method comprising: positioning at least one RF unit in each of a plurality of rooms of the building; each RF unit emitting the radio frequency beacon signals; the mobile device receiving at least some of the beacon signals and determining a received signal strength of each of the received beacon signals; and the mobile device, or optionally a said computer module, calculating from the received signal strengths a room-representative received signal strength for each room from which the beacon signals have been received, and determining which room the mobile device is located in, by selecting the room having the highest value of calculated room-representative received signal strength.

The invention can entail a method of locating a mobile device in a building by means of an indoor location system according to the second aspect of the invention, the method comprising: positioning at least one RF unit in each of a plurality of rooms of the building; the mobile device emitting the radio frequency beacon signals; and each of a plurality of the RF units receiving one or more of the beacon signals, determining a received signal strength of each of the received beacon signals and communicating the received signal strengths to: (a) the mobile device, or (b) a said computer module; and the mobile device or the computer module calculating from the received signal strengths a room-representative received signal strength for each room from which the received signal strengths have been communicated, and determining which room the mobile device is located in, by selecting the room having the highest value of calculated room-representative received signal strength.

The invention can entail an indoor location system for locating a mobile device, comprising a set of RF units configured to be positioned in a plurality of rooms in a building such that at least one of the RF units is located in each room, wherein each RF unit is configured to emit radio frequency beacon signals, each beacon signal including an identifier of the emitting RF unit and/or of the room in which the RF unit is located, the system including software for configuring at least one mobile device to be a radio frequency receiver such that the mobile device is configured to receive at least some of the beacon signals and determine a received signal strength of each of the received beacon signals; optionally, the software for configuring a said mobile device to communicate the received signal strengths to a computer module optionally connected to the RF units, each received signal strength communication including an identifier of the emitting RF unit and/or of the room in which the RF unit is located, and including an identifier of the mobile device; and_wherein the software is for configuring a said mobile device, or optionally a said computer module is configured, to calculate from the received signal strengths a room-representative received signal strength for each room from which the beacon signals have been received, and to determine which room the mobile device is located in, by selecting the room having the highest value of calculated room-representative received signal strength.

The invention can entail an indoor location system for locating a mobile device, comprising a set of RF units configured to be positioned in a plurality of rooms in a building such that at least one of the RF units is located in each room, the system including software for configuring at least one mobile device to be a radio frequency transmitter such that the mobile device is configured to emit radio frequency beacon signals, each beacon signal including an identifier of the mobile device, and wherein each of a plurality of the RF units is configured to receive one or more of the beacon signals, determine their received signal strengths and communicate the received signal strengths to: (a) a said mobile device; or (b) a computer module optionally connected to the RF units, each received signal strength communication including an identifier of the mobile device; wherein each received signal strength communication includes an identifier of the communicating RF unit and/or of the room in which the RF unit is located, and wherein the software is for configuring a said mobile device, or optionally a said computer module is configured, to calculate from the received signal strengths a room-representative received signal strength for each room from which the received signal strengths have been communicated, and to determine which room the mobile device is located in, by selecting the room having the highest value of calculated room-representative received signal strength.

The invention can entail a mobile device or a radio frequency unit configured for use in a location system or method according to either aspect of the invention.

It is to be understood that any feature, including any preferred feature, of an aspect of the invention may be a feature, including a preferred feature, of any other aspect of the invention. The following description concerns all aspects of the invention. References to the location system also apply to the method of locating a mobile device, and vice versa.

Preferably, the location system is configured for, or the method includes, a plurality of the radio frequency units (RF units) being located in each of the plurality of rooms of a building. (Such RF units are sometimes referred to as "beacons", or "units", herein.)

The mobile device or the computer module, respectively, is configured to determine a unit-representative received signal strength for each radio frequency unit, from which each room-representative received signal strength is calculated. The unit-representative received signal strength for each unit is an average for two or more, preferably of three or more, received beacon signals (received from that RF unit). For the sake of simplicity, the term "average" is used throughout this specification, including the claims, to represent any of a variety of mathematical functions that may be used as measures of central tendency, including, but not limited to, the following: arithmetic mean; geometric mean; quadratic mean (root mean square, i.e. the square root of the arithmetic mean of the squares); cubic mean; harmonic mean; weighted average (i.e. weighted arithmetic mean); mode; median. Preferred implementations of the invention may utilize any of these mathematical functions, or any other measures of central tendency, as the "average".

The unit-representative received signal strength for each RF unit preferably is the highest average received signal strength of received beacon signals selected from a plurality of average received signal strengths of received beacon signals, each average received signal strength preferably being the average for a respective frequency channel. The unit-representative received signal strength for each RF unit preferably is the highest average received signal strength of received units signals selected from three average received signal strengths of received beacon signals.

The mobile device, or the computer module, respectively, is configured to calculate each room-representative received signal strength, at least in part from a determination of a maximum unit-representative received signal strength for each room. Additionally or alternatively, the mobile device, or the computer module, respectively, is configured to calculate each room-representative received signal strength, at least in part from an average of unit-representative received signal strength values for that room. As indicated above, the average of unit-representative received signal strength values may for example, be any of the following: the arithmetic mean; geometric mean; quadratic mean (root mean square, i.e. the square root of the arithmetic mean of the squares); cubic mean; harmonic mean; weighted average (i.e. weighted arithmetic mean); mode; median. The average of unit-representative received signal strength values for each room preferably is an average for three units in each respective room.

Preferably, the mobile device, or the computer module, respectively, is configured to calculate each room-representative received signal strength, at least in part by multiplying the average of unit-representative received signal strength values for that room by a factor. More preferably, the mobile device, or the computer module, respectively, is configured to calculate each room-representative received signal strength by multiplying the average of unit-representative received signal strength values for that room by a factor, and by adding the product thereof to the maximum unit-representative received signal strength for that room. Preferably, the factor has a value of greater than zero and less than 1.

In preferred embodiments of the invention, the mobile device, or the computer module, respectively, is configured to determine that the mobile device is located in a second room which is different to that of a first room, which first room was the location of the mobile device as determined by an immediately preceding room location determination, only if the calculated room-representative received signal strength for the second room (i.e. the highest value of calculated room-representative RSS) is greater by at least a predetermined amount, preferably by at least 9.6 dB, than the value of currently calculated room-representative received signal strength for the first room. The predetermined amount is sometimes referred to as the "room-separation factor" in this specification. The "room-separation factor" preferably is 9.6 dB, but other predetermined differences in RSS may be used as the room-separation factor, depending upon the particular conditions and requirements (e.g. different environments and deployments). The predetermined amount (i.e. the "room-separation factor") may be a fixed amount for a particular building, or it may vary by room position within a building and/or it may vary with time and/or it may vary with wireless signal density, etc (e.g. it may be programmable). In some implementations of the invention, the particular room-separation factor (the predetermined amount) may be transmitted to the mobile device by one or more of the RF units, for example. This requirement for such a predetermined minimum difference, namely a "room-separation factor", before it is decided that the mobile device has moved from one room to another is intended to prevent (or at least reduce) the possibility that it is erroneously decided that the mobile device has moved rooms (when in fact it has not), e.g. due to variations in the RSS measurements. The value of 9.6dB has been found to work well in many indoor environments, but other values (which may be pre-programmed or dynamically varied) may be used.

In some preferred implementations of the invention, a difference by which the value of the calculated room-representative received signal strength for the second room is greater than that calculated for the first room is designated as providing at least part of a level of confidence (preferably expressed as a probability) in the room location determination.

Preferably, the mobile device, or each radio frequency unit, respectively, is configured to emit the radio frequency beacon signals periodically, preferably every predetermined fraction of a second. Each radio frequency unit, or the mobile device, respectively, preferably is configured such that it functions as a radio frequency receiver, to receive the radio frequency beacon signals, periodically, preferably every predetermined fraction of a second. In each case, the predetermined fraction of a second preferably may be varied.

In preferred embodiments of the invention, the received signal strength (RSS) comprises received signal strength indication (RSSI).

Preferably, the location system and the method according to the invention, further comprise a computer module (which preferably is the said computer module), the mobile device preferably being configured to report its determined room location to the computer module. The mobile device and the computer module preferably are configured to communicate with each other by means of a radio frequency signal, preferably a Wi-Fi signal or a Bluetooth signal, e.g. a Bluetooth Low Energy (BLE, or Bluetooth Smart) signal. For example, the mobile device and the computer module may be configured to communicate with each other via the RF units.

Preferably the (or each) computer module of the location system according to the second aspect of the invention, and of the method according to the fourth aspect of the invention, is configured to be connected to the radio frequency units by means of wireless connections. Preferably the system and method includes at least one gateway unit configured to wirelessly interconnect each radio frequency unit to a said computer module. The wireless connections between the radio frequency units and the gateway unit preferably are configured to be Bluetooth, e.g. Bluetooth Low Energy, connections, and/or preferably the wireless connection between the gateway unit and the computer module is configured to be a Wi-Fi connection.

The computer module of each aspect of the invention preferably is configured to be a location engine. Preferably software configured to be run on the location engine and/or on one or more computer devices configured to be connected to the location engine, provides a user interface (e.g. a display) for locating, and preferably for tracking, the (or each) mobile device in a building. The computer module may be a server, desktop computer, laptop computer, tablet computer, smartphone, or cloud-based computer, for example.

In preferred implementations of the invention, the computer module or the mobile device (respectively), may use additional information as part of the location system/method, especially in order to determine which room the mobile device is located in. Such additional information may comprise any or all of the following, for example: building construction characteristics of the building, e.g. the types of walls, floors, ceilings of the building; the positions of the RF units in the rooms; location information relating to other mobile devices in the building; wireless signal propagation characteristics of the building, or portions of the building.

The radio frequency units preferably are battery powered. The mobile device preferably comprises a mobile telephone or other mobile communications and/or computer device, or a radio frequency tag or transponder. Each radio frequency unit preferably comprises a wireless personal area network (WPAN) unit, preferably a Bluetooth unit, especially a Bluetooth Low Energy or Bluetooth Smart unit. The radio frequency beacon signals preferably are wireless personal area network (WPAN) signals, more preferably Bluetooth signals, especially Bluetooth Low Energy or Bluetooth Smart signals. Most preferably the radio frequency beacon signals are advertising signals, e.g. Bluetooth Low Energy or Bluetooth Smart advertising signals.

The mobile device identifier and/or each RF unit identifier preferably is a serial number, MAC address, UUID, or any other identifier which can be transmitted as part of a wireless message. Preferably, each RF unit identifier includes the room identifier of the room in which the RF unit is installed.

Preferably, a plurality of mobile devices may be located by the systems and methods of the invention.

Preferred embodiments of the invention will now be described, by way of example, with reference to the accompanying drawings, of which:
Figure 1 is a schematic drawing of a building incorporating an example of a location system according to the first and fifth aspects of the invention, using an example of a locating method according to the third aspect of the invention;
Figure 2, views (a) and (b) are diagrams illustrating examples of process steps as used in location systems according to the first and fifth aspects of the invention, using examples of locating methods according to the third aspect of the invention, e.g. as illustrated in Figure 1;
Figure 3 is a schematic drawing of a building incorporating an example of a location system according to the second and sixth aspects of the invention, using an example of a locating method according to the fourth aspect of the invention;
Figure 4 is a diagram illustrating an example of process steps as used in a location system according to the second and sixth aspects of the invention, using an example of a locating method according to the fourth aspect of the invention, e.g. as illustrated in Figure 3.

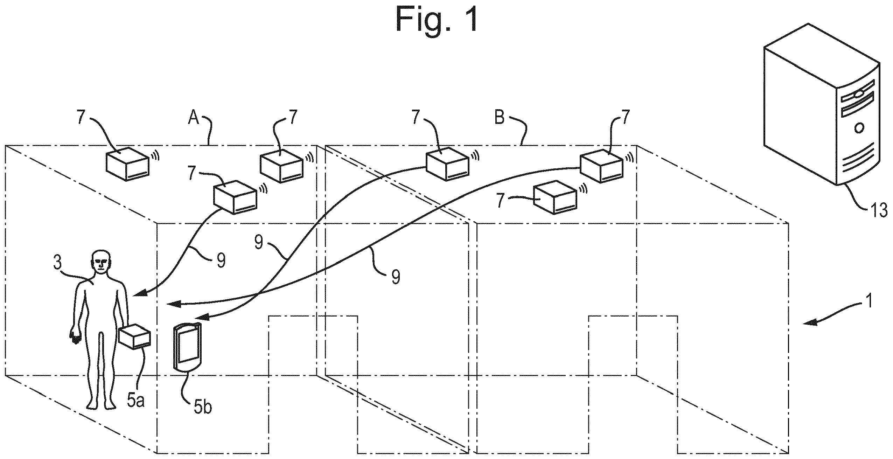

Figure 1 schematically shows a building 1, which for the purpose of simplicity comprises two rooms, room A and room B. A person 3 is schematically illustrated as being located in room A, and carrying a mobile device 5 in the form of either a radio frequency tag 5a or a mobile telephone (e.g. a cell phone) 5b. The indoor location system comprises the mobile device 5 and a set of radio frequency units 7 (i.e. RF units 7). According to the system and method of the invention, at least one radio frequency unit 7 is located in each of the plurality of rooms, and as illustrated in Figure 1, three of the radio frequency units 7 are located in each room. As illustrated, the radio frequency units 7 are attached to the ceilings of the rooms A and B, but substantially any convenient room positions for the radio frequency units may be used. The radio frequency units 7 preferably are battery powered.

Each radio frequency unit 7 is configured to emit radio frequency beacon signals 9, e.g. as Bluetooth Low Energy (BLE) signals, and preferably as BLE advertising signals. Each beacon signal 9 includes an identifier of the emitting radio frequency unit and/or of the room in which the unit is located. The mobile device 5 is configured to receive at least some of the beacon signals 9 and to determine a received signal strength of each of the received beacon signals. The location system also includes a computer module 13, which may, for example, be a location engine of the location system. The computer module 13 may, for example, provide a user interface, e.g. a display, by which the (or each) mobile device 5 may be located, and preferably tracked, in the building 1.

In one version of the location system, the mobile device 5 calculates from the received signal strengths of the beacon signals a room-representative received signal strength for each room from which the beacon signals have been received, and determines which room the mobile device is located in, by selecting the room having the highest value of calculated room-representative received signal strength. The mobile device 5 also reports its determined room location wirelessly (e.g. by Wi-Fi or Bluetooth) to the computer module 13.

In another version of the location system, the mobile device 5 wirelessly communicates (e.g. by Wi-Fi or Bluetooth) the received signal strengths of the beacon signals to the computer module 13, and it is the computer module 13 which determines which room the mobile device is located in, by selecting the room having the highest value of calculated room-representative received signal strength.

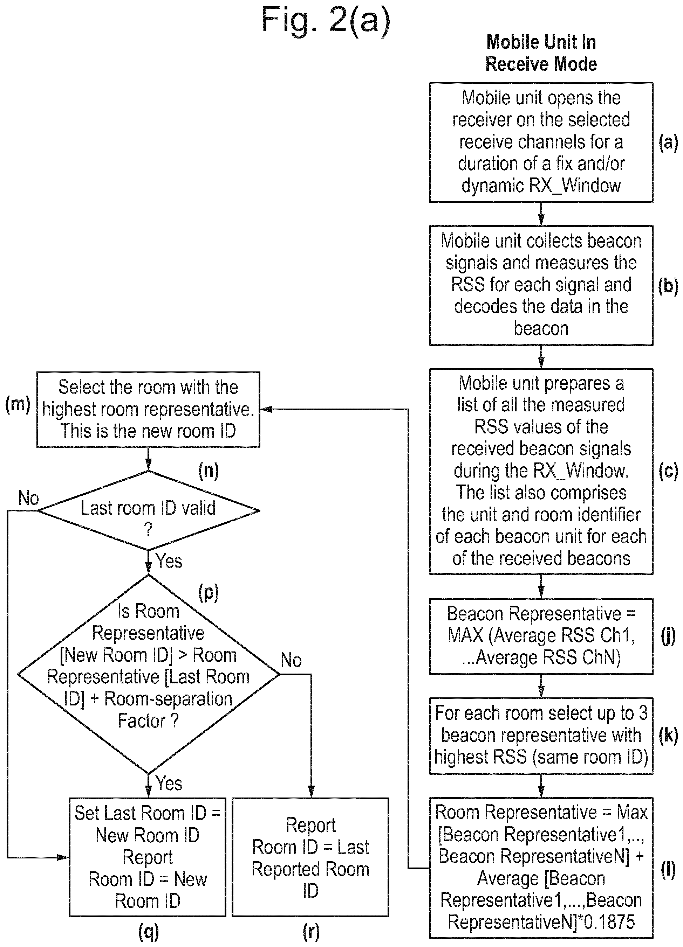

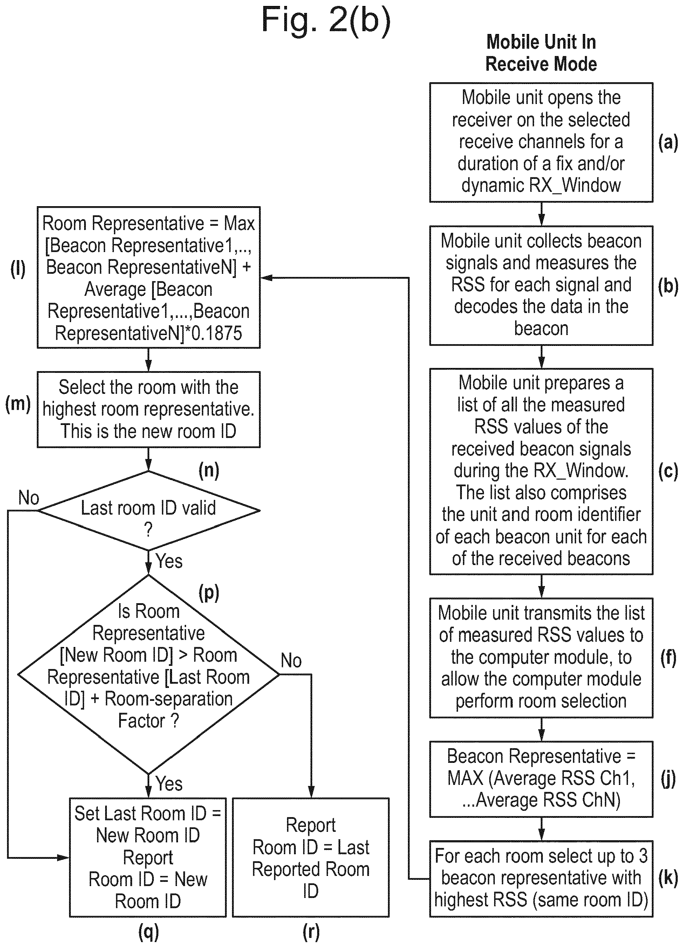

Figure 2 (a) and Figure 2 (b) are two diagrams illustrating the process steps as used in the location system and method of Figure 1. Figure 2 (a) sets out the process steps for the version of the system in which the mobile device 5 performs the room determination, and Figure 2 (b) sets out the process steps for the version of the system in which the computer module 13 performs the room determination. The two diagrams are identical to each other, except that Figure 2 (b) includes an additional process step, identified as Box (f), by which the mobile device 5 communicates the received signal strengths to the computer module 13, so that the computer module 13 can calculate the room-representative received signal strength for each room and determine which room the mobile device is located in. The same process steps in Figures 2 (a) and (b) are identified by the same letters, but it should be understood that process step boxes (j) to (r) of Figure 2 (a) are carried out by the mobile device 5, whereas process step boxes (j) to (r) of Figure 2 (b) are carried out by the computer module 13.

Process steps (a), (b) and (c) of figures 2(a) and 2(b) comprise an initial portion of the method used by the location system, in which received signal strengths (RSS) are measured and other beacon signal data are collected. Process steps (f) (for the version in which this step is present), and (j) to (r) of figures 2(a) and 2(b), are the various steps of the room determination (room discrimination) portion of the method used by the location system.

Box (a) of each of figures 2(a) and 2(b) specifies: "Mobile unit opens the Receiver on the selected Receive Channels for a duration of a fix and/or dynamic RX_Window", meaning that the mobile device 5 ("Mobile unit") enters its receiver mode (e.g. on up to three radio frequency channels) for a fixed or variable duration of time ("Rx_Window"). The predetermined receiver mode duration is normally a fraction of a second, e.g. 300 ms, but the duration preferably is configurable, as preferably is the time spacing between the receiving windows. The three radio frequency channels preferably are the three BLE advertising channels.

Box (b) of figures 2(a) and 2(b) specifies: "Mobile unit collects beacon signals and measures the RSS for each signal and decodes the data in the beacon", meaning that the mobile device 5 receives beacon signals 9 emitted by at least some of the radio frequency units 7, measures the received signal strengths of the beacon signals, and decodes the data in the beacon signals. Each radio frequency unit 7 emits beacon signals 9 on each of the three radio frequency channels every predetermined fraction of a second, e.g. every 100 ms, but this timing is configurable. Preferably up to three beacon signals per channel are received from each radio frequency unit 7 for which the mobile device 5 is in range to receive the beacon signals. The mobile device 5 measures the received signal strength (RSS) of each of the beacon signals 9 which it receives. The RSS preferably is the received signal strength indication (RSSI), but the mobile device may be configured by the skilled person to measure the RSS in a way which is not strictly the RSSI, for example. Each beacon signal includes an identifier of the emitting RF unit and/or of the room in which the RF unit is located.

Box (c) of figures 2(a) and 2(b) specifies: "Mobile unit prepares a list of all the measured RSS values of the received beacon signals during the RX_Window. The list also comprises the unit and room identifier of each beacon unit for each of the received beacons", meaning that for each beacon signal 9 received by the mobile device 5 in steps (a) and (b), the mobile device stores the received signal strength (RSS) in a list, together with the identifier of the RF unit 7 from the which the beacon signal was received and/or also together with the identifier of the room in which that RF unit 7 is located. An example of such a list is as follows:

| **Sequence number** | **RF Unit ID (Beacon unit)** | **Room ID** | **RX Channel** | **Measured RSS (dBm)** |
|---|---|---|---|---|
| 1 | 1267 | 34 | 1 | -55 |
| 2 | 1267 | 34 | 2 | -56 |
| 3 | 1267 | 34 | 3 | -51 |
| 22 | 765 | 34 | 1 | -62 |
| 23 | 765 | 34 | 1 | -61 |
| 24 | 765 | 34 | 2 | -58 |
| 25 | 765 | 34 | 2 | -59 |
| 8 | 112 | 34 | 1 | -39 |
| 9 | 112 | 34 | 1 | -40 |
| 10 | 112 | 34 | 3 | -36 |
| 11 | 112 | 34 | 3 | -37 |
| 42 | 231 | 34 | 1 | -83 |
| 43 | 231 | 34 | 1 | -81 |
| 44 | 231 | 34 | 1 | -81 |
| 45 | 231 | 34 | 3 | -79 |
| 11 | 97 | 52 | 1 | -86 |
| 12 | 97 | 52 | 1 | -87 |
| 13 | 97 | 52 | 2 | -85 |
| 14 | 97 | 52 | 2 | -85 |
| 15 | 97 | 52 | 3 | -86 |
| 16 | 97 | 52 | 3 | -86 |

The sequence numbers indicate the order in which the beacon signals are received during the signal reception window of time; "RF Unit ID" is the identifier of the RF unit which emitted a particular beacon signal; "Room ID" is the identifier of the room in which the respective RF unit is located; "RX Channel" is the RF channel in which the beacon signal was transmitted and received; and "Measured RSS (dBm)" is the received signal strength (measured in dBm) of the respective beacon signal as determined by the mobile device.

The process steps described by boxes (a) to (c) of figures 2(a) and 2(b) complete the common process steps of the initial portion of the method used by these two implementations of the location system according to the invention. This initial portion is the portion in which received signal strengths are measured and other beacon signal data are collected.

Box (f) of Figure 2(b) specifies: "Mobile unit transmits the list of measured RSS values to the computer module, to allow the computer module perform room selection", meaning that in the Figure 2(b) version of the location system of the invention, in this process step, the mobile device 5 communicates the received signal strengths to the computer module 13, each received signal strength communication including the identifier of the emitting RF unit and/or of the room in which the RF unit is located (e.g. as indicated in the above list example), and including an identifier of the mobile device.

Next, as mentioned above, the process steps of boxes (j) to (r) of Figure 2 (a) are carried out by the mobile device 5, whereas the process steps of boxes (j) to (r) of Figure 2 (b) are carried out by the computer module 13. These process steps, whether carried out by the mobile device 5 or by the computer module 13, are the substantive steps of the room determination (room discrimination) portion of the method used by the location system of the invention.

Box (j) of figures 2(a) and 2(b) specifies: "Beacon Representative = MAX (Average RSS Ch1, ...Average RSS ChN)", meaning that the mobile device 15, or the computer module 13, (respectively) calculates the average received signal strength (RSS) per radio frequency channel, and then selects the highest (i.e. the maximum value) average RSS, which is then designated as the representative RSS for that radio frequency unit 7 (i.e. the "Beacon Representative RSS" for that "beacon", i.e. for that RF unit 7). This calculation is performed for each of the radio frequency units 7 from which the mobile device has received beacon signals 9 and measured their RSS in the process step of Box (b). As indicated earlier in this specification, the average of received signal strength values may for example, be any of the following: the arithmetic mean; geometric mean; quadratic mean (root mean square, i.e. the square root of the arithmetic mean of the squares); cubic mean; harmonic mean; weighted average (i.e. weighted arithmetic mean); mode; median.

Box (k) of figures 2(a) and 2(b) specifies: "For each Room select up to 3 Beacon Representative with highest RSS (same Room ID)", meaning that, for each room (e.g. A and B) of the building 1, the mobile device 5, or the computer module 13, (respectively) preferably selects up to three unit-representative received signal strength (RSS) values. (By "Beacon Representative" RSS is meant "unit-representative" RSS.) If there are three radio frequency units 7 in a particular room (i.e. with the same room identifier), for which the unit-representative received signal strength has been calculated, then preferably those three calculated unit-representative RSS are selected. If there are fewer than three radio frequency units 7 in a particular room, for which the unit-representative RSS has been calculated, then preferably the one or two unit-representative RSS which has/have been calculated are selected. If there are more than three radio frequency units 7 in a particular room, for which the unit-representative RSS has been calculated, then preferably the three highest (greatest calculated value) unit-representative RSS are selected.

Box (I) of figures 2(a) and 2(b) specifies: "Room Representative = Max [Beacon Representative1, ..., Beacon RepresentativeN] + Average [Beacon Representative1, ..., Beacon RepresentativeN]*0.1875", meaning that, for each room, the mobile device 5, or the computer module 13, (respectively) calculates a room-representative received signal strength of the received beacon signals, as follows. One part of the calculation requires selecting the maximum (i.e. the greatest calculated value of) Beacon Representative RSS (i.e. the maximum value of unit-representative received signal strength) for that room. Another part of the calculation requires calculating the average of the Beacon Representative RSS selected in Box (k) for that room, and multiplying the average by a factor. The factor preferably is less than 1 and greater than zero. In a preferred implementation of the invention, the factor is chosen to be 0.1875. The final part of this calculation is to add together the results of the two calculation parts, to obtain a received signal strength value which is designated as the room-representative received signal strength value for that room (i.e. the "Room Representative" RSS for that room). The mobile device 5, or the computer module 13, (respectively) performs this calculation for each of the rooms from which the mobile device has received beacon signals 9 and measured their RSS in the process step of Box (b). As indicated earlier in this specification, the average of the unit-representative received signal strength values may for example, be any of the following: the arithmetic mean; geometric mean; quadratic mean (root mean square, i.e. the square root of the arithmetic mean of the squares); cubic mean; harmonic mean; weighted average (i.e. weighted arithmetic mean); mode; median.

Box (m) of figures 2(a) and 2(b) specifies: "Select the Room with the highest Room Representative. This is the New Room ID", meaning that the mobile device 5, or the computer module 13, (respectively) then selects the greatest calculated value of room-representative received signal strength (RSS), as calculated for Box (I) above, and the room identifier (Room ID) of the room with that greatest room-representative RSS becomes the provisional new room location determination for the mobile device ("New Room ID"). In some implementations of the invention, the room location determination ends here, with the provisional new room location determination ("New Room ID") being designated as the room location determination for the mobile device ("Room ID"). However, in preferred implementations of the invention, the method used by the location system continues with the following process steps.

Decision Box (n) of figures 2(a) and 2(b) specifies: "Last Room ID Valid?", meaning that the mobile device 5, or the computer module 13, (respectively) determines whether or not there is a pre-existing valid determined room location for the mobile device ("Last Room ID"). If there is a pre-existing valid room location ("Last Room ID") for the mobile device 5, this is because a room location determination for the mobile device 5 has previously been validly carried out, and "Last Room ID" has been designated (in the process step of Box (q) below) in a previous performance of the room location determination method. If there is a pre-existing valid room location determination for the mobile device 5, then the method of the location system proceeds to the process step of Box (p). If there is no pre-existing valid room location determination for the mobile device 5, then the method of the location system proceeds to the process step of Box (q). There are various possible reasons for there being no pre-existing valid room location determination for the mobile device; for example, the current room location determination procedure may be the first one to have been carried out while the mobile device 5 has been in the building (e.g. the mobile device has just been brought into the building, or has just been switched on), or a valid Last Room ID has expired after a pre-set period of time, or the mobile device has been located by another means (e.g. by GPS), or there may be an error or inconsistency in the room determination process for the mobile device.

Decision Box (p) of figures 2(a) and 2(b) specifies: "Is Room Representative [New Room ID] > Room Representative [Last Room ID] + Room-separation factor?", meaning that the mobile device 5, or the computer module 13, (respectively) then carries out a calculation to determine whether or not the mobile device has moved rooms, as follows. This calculation requires a minimum threshold difference in calculated values (the "Room-separation factor"), to ensure that a determination that the mobile device has moved rooms is correct. This is done by comparing the current greatest calculated value of room-representative received signal strength as selected for Box (m) above (i.e. what is referred to as the "highest Room Representative" in Box (m), and what is referred to as "Room Representative [New Room ID]" in Box (p)), with the current room-representative received signal strength for the room which was determined to be the location of the mobile device in the immediately preceding room location determination process ("Room Representative [Last Room ID]"). Thus, the comparison is between two currently calculated room-representative received signal strengths as calculated in the current room location determination process (specifically, as calculated in the process step of Box (I)). If Room Representative [New Room ID] is greater by at least a predetermined amount (i.e. a "Room-separation factor") than Room Representative [Last Room ID], then the mobile device 5, or the computer module 13, (respectively) determines that the room in which the mobile device is currently located is a room (e.g. Room B) which is a different room to a room (e.g. Room A) in which the mobile device was determined to be located by the immediately preceding room location determination process. If Room Representative [New Room ID] is not greater by at least the predetermined amount than Room Representative [Last Room ID], then the mobile device 5, or the computer module 13, (respectively) determines that the mobile device is still located in the first room (e.g. Room A).

The "Room-separation factor" preferably is 9.6 dB, but other predetermined differences in RSS may be used as the Room-separation factor, depending upon the particular conditions and requirements. This requirement for such a predetermined minimum difference, namely a "Room-separation factor", before it is decided that the mobile device has moved from one room to another is intended to prevent (or at least reduce) the possibility that it is erroneously decided that the mobile device has moved rooms (when in fact it has not), e.g. due to variations in the RSS measurements. The value of 9.6dB has been found to work well in many indoor environments, but other values (which may be pre-programmed or dynamically varied) may be used.

In some implementations of the invention, the value of the difference between "Room Representative (New Room ID)" and "Room Representative (Last Room ID)" may also be used to provide a level of confidence in the room location determination decision. For example, the confidence level may be expressed as a probability of the mobile unit being located in the reported Room ID, e.g. expressed as a value between 0 and 1, preferably between 0.5 and 1. In some implementations of the invention, the probability may also be affected by other factors related to the room determination process (e.g. absolute RSS values, number of beacon signals received, etc.).

If the decision of Box (n) is that there is no valid pre-existing room identifier, or if the decision of Box (p) is that Room Representative [New Room ID] is greater by at least the predetermined amount (the "Room-separation factor") than Room Representative [Last Room ID] (i.e. that the mobile device has moved room locations), then the method of the location system proceeds to the process step of Box (q). Box (q) of figures 2(a) and 2(b) specifies: "Set Last Room ID = New Room ID. Report Room ID = New Room ID.", meaning that: (i) the New Room ID selected in the process step of Box (m) is designated as the Last Room ID (for the purposes of the process steps of boxes (n) and (p) in the next room location determination process); and (ii) the mobile device 5, or the computer module 13, (respectively) reports that the current location of the mobile device is the New Room ID as selected in the process step of Box (m) (i.e. the provisional new room location determination of Box (m) is no longer provisional, but instead is now the reported determined current room location of the mobile device). In those implementations of the invention in which the mobile device performs the room location determination calculation, the mobile device preferably wirelessly reports this room location determination to the computer module, and the computer module thus also reports the room location determination.

If the decision of Box (p) is that Room Representative [New Room ID] is not greater by at least the predetermined amount (the "Room-separation factor") than Room Representative [Last Room ID] (i.e. that the mobile device 5 has not moved room locations), then the method of the location system proceeds to the process step of Box (r). Box (r) of figures 2(a) and 2(b) specifies: "Report Room ID = Last Reported Room ID", meaning that the valid Last Room ID (i.e. the pre-existing valid room location determination for the mobile device 5, as set in a previous performance of the process step of Box (q)) is reported by the mobile device 5, or by the computer module 13, (respectively) as the current determined room location of the mobile device 5. As with the process step of Box (q) above, in those implementations of the invention in which the mobile device performs the room location determination calculation, the mobile device preferably wirelessly reports this room location determination to the computer module, and the computer module thus also reports the room location determination.

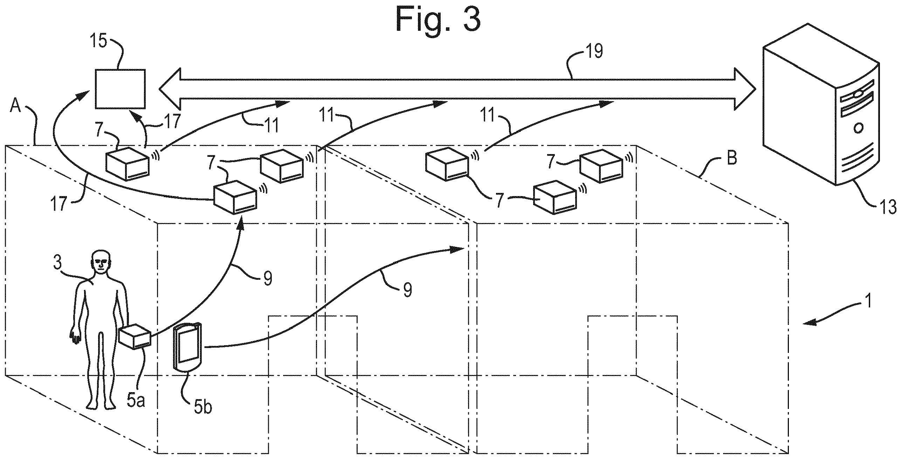

Figure 3 is a schematic drawing of a building incorporating an example of a location system according to the second and sixth aspects of the invention, using an example of a locating method according to the fourth aspect of the invention. Figure 3 differs from Figure 1 by virtue of the fact that in the second aspect of the invention it is the mobile device 5 (e.g. a tag 5a or a mobile telephone 5b) which emits the beacon signals 9, and each of a plurality of the radio frequency units 7 receives one or more of the beacon signals. Each beacon signal 9 preferably is a Bluetooth Low Energy (BLE) signal, especially a BLE advertising signal, and includes an identifier of the mobile device 5. Each radio frequency unit 7 which receives a beacon signal measures its received signal strength. The received signal strengths are communicated by the radio frequency units 7 to the computer module 13 (which may, for example, by a location engine of the location system), or in a different implementation of the invention, the received signal strengths are communicated wirelessly (e.g. by Wi-Fi or Bluetooth) by the radio frequency units 7 to the mobile device 5. Depending upon which implementation of the invention is used, either the computer module 13, or the mobile device 5, calculates from the received signal strengths a room-representative received signal strength for each room from which the received signal strengths have been communicated, and determines which room the mobile unit 5 is located in, by selecting the room having the highest value of calculated room-representative received signal strength.

Each communication of received signal strength includes an identifier of the communicating unit 7 and/or of the room in which the unit is located, and includes an identifier of the mobile device. The communication of the received signal strengths from the radio frequency units 7 to the computer module 13 may be by wireless communications 11, for example Wi-Fi or Bluetooth (e.g. BLE), or it may be by wired or other hardware connections. For wireless communications between the radio frequency units 7 and the computer module 13, at least one gateway module or unit 15 may (or may not) be included, for example for receiving Bluetooth (e.g. BLE) received signal strength communications 17 from the radio frequency units and transferring the communications to the computer module via Wi-Fi communications 19. (The communications 17 and 19 in combination thus comprise the received signal strength communications.) The computer module 13, or the mobile device 5, calculates from the received signal strengths a room-representative received signal strength for each room from which the received signal strengths have been communicated, and determines which room the mobile unit 5 is located in, by selecting the room having the highest value of calculated room-representative received signal strength. If the mobile device 5 has carried out the room location determination, this preferably is reported wirelessly to the computer module 13. The computer module 13 may, for example, provide a user interface by which the (or each) mobile device 5 may be located, and preferably tracked, in the building 1.

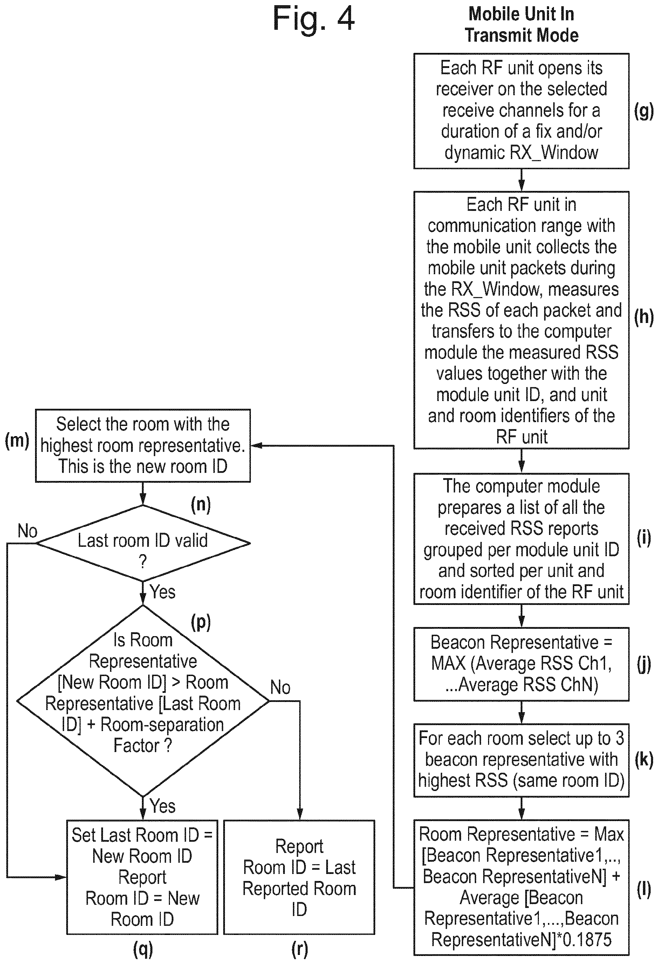

Figure 4 is a diagram illustrating the process steps as used in the location system and method of Figure 3. For simplicity, only a single diagram is shown (rather than two diagrams, as in Figure 2). The diagram of Figure 4 illustrates a version of the method of the invention in which the computer module performs the room location determination portion. However, the skilled person will understand, as described earlier in this specification and below, how the method may be modified so that it is the mobile device which performs the room location determination portion. The process steps of boxes (j) to (r) of Figure 4 are identical to those of figures 2(a) and 2(b), in which the mobile device, or the computer module, (respectively) performs the room location determination portion of the method.

Box (g) of Figure 4 specifies: "Each RF unit opens its Receiver on the selected Receive Channels for a duration of a fix and/or dynamic RX_Window", meaning that each RF unit 7 enters its receiver mode (e.g. on up to three radio frequency channels) for a fixed or variable duration of time ("Rx_Window"). The predetermined receiver mode duration is normally a fraction of a second, e.g. 300 ms, but the duration preferably is configurable, as preferably is the time spacing between the receiving windows. The three radio frequency channels preferably are the three BLE advertising channels.

Box (h) of Figure 4 specifies: "Each RF unit in communication range with the mobile unit collects the mobile unit packets during the RX_Window, measures the RSS of each packet and transfers to the computer module the measured RSS values together with the mobile unit ID, and unit and room identifiers of the RF unit". This means that each RF unit 7 in communication range with the mobile device 5 receives beacon signals 9 emitted by the mobile device 5, measures the received signal strengths of the beacon signals, and transfers to the computer module 13 the measured RSS values together with an identifier of the mobile device, and also together with identifiers of the RF unit and of the room in which the RF unit is located. [In an alternative version of this method, the measured RSS values are transferred to the mobile device 5 rather than to the computer module 13.] The mobile device 5 emits beacon signals 9 on each of the three radio frequency channels every predetermined fraction of a second, e.g. every 100 ms, but this timing is configurable. Preferably up to three beacon signals per channel are received by each radio frequency unit 7 with which the mobile device 5 is in communication range. Each RF unit 7 measures the received signal strength (RSS) of each of the beacon signals 9 which it receives. The RSS preferably is the received signal strength indication (RSSI), but the RF units may be configured by the skilled person to measure the RSS in a way which is not strictly the RSSI, for example. Each beacon signal includes an identifier of the emitting mobile device.

Box (i) of Figure 4 specifies: "The computer module prepares a list of all the received RSS reports grouped per Mobile unit ID and sorted per unit and room identifier of the RF unit", meaning that for each emitting mobile device 5, the computer module 13 stores the received signal strength (RSS) communications in a list, together with the identifiers of the RF units 7 which received the beacon signals and/or also together with the identifier of the room in which the RF units 7 are located. [In an alternative version of this method, it is the mobile device 5 which does this.] An example of such a list is as follows:

| **Mobile unit ID** | **Sequence number** | **RF Unit ID (receiving unit)** | **Room ID** | **RX Channel** | **Measured RSS (dBm)** |
|---|---|---|---|---|---|
| 812 | 1 | 1267 | 34 | 1 | -45 |
| 812 | 2 | 1267 | 34 | 2 | -46 |
| 812 | 3 | 1267 | 34 | 3 | -48 |
| 812 | 22 | 765 | 34 | 1 | -37 |
| 812 | 23 | 765 | 34 | 1 | -38 |
| 812 | 24 | 765 | 34 | 2 | -38 |
| 812 | 25 | 765 | 34 | 2 | -38 |
| 812 | 42 | 231 | 34 | 1 | -73 |
| 812 | 43 | 231 | 34 | 1 | -71 |
| 812 | 44 | 231 | 34 | 1 | -71 |
| 812 | 45 | 231 | 34 | 3 | -75 |
| 812 | 11 | 97 | 52 | 1 | -66 |
| 812 | 12 | 97 | 52 | 1 | -67 |
| 812 | 13 | 97 | 52 | 2 | -65 |
| 812 | 14 | 97 | 52 | 2 | -65 |
| 812 | 15 | 97 | 52 | 3 | -66 |
| 812 | 16 | 97 | 52 | 3 | -66 |

| **Mobile unit ID** | **Sequence number** | **RF Unit ID (receiving unit)** | **Room ID** | **RX Channel** | **Measured RSS (dBm)** |
|---|---|---|---|---|---|
| 49 | 81 | 1267 | 34 | 1 | -75 |
| 49 | 82 | 1267 | 34 | 2 | -76 |
| 49 | 83 | 1267 | 34 | 3 | -71 |
| 49 | 99 | 765 | 34 | 1 | -62 |
| 49 | 100 | 765 | 34 | 1 | -61 |
| 49 | 101 | 765 | 34 | 1 | -58 |
| 49 | 103 | 765 | 34 | 2 | -59 |
| 49 | 5 | 231 | 34 | 1 | -83 |
| 49 | 6 | 231 | 34 | 1 | -82 |
| 49 | 7 | 231 | 34 | 1 | -82 |
| 49 | 8 | 231 | 34 | 3 | -79 |
| 49 | 66 | 32 | 18 | 1 | -46 |
| 49 | 67 | 32 | 18 | 1 | -47 |
| 49 | 68 | 32 | 18 | 2 | -45 |
| 49 | 69 | 32 | 18 | 2 | -46 |
| 49 | 70 | 32 | 18 | 3 | -46 |
| 49 | 71 | 32 | 18 | 3 | -44 |

The "Mobile Unit ID" numbers are the identifiers of the emitting mobile devices 5 (there are two emitting mobile devices indicated in the above list); the sequence numbers indicate the order in which the beacon signals are received during the signal reception window of time; "RF Unit ID" is the identifier of the RF unit which received a particular beacon signal; "Room ID" is the identifier of the room in which the respective RF unit is located; "RX Channel" is the RF channel in which the beacon signal was transmitted and received; and "Measured RSS (dBm)" is the received signal strength (measured in dBm) of the respective beacon signal as determined by the respective RF unit.

The process steps described by boxes (g) to (i) of Figure 4 complete the process steps of the initial portion of the method used by these two implementations of the location system according to the invention. This initial portion is the portion in which received signal strengths are measured and other beacon signal data are collected.

Next, as mentioned above, the process steps of boxes (j) to (r) of Figure 4 may be carried out by the computer module 13 or by the mobile device 5. These process steps, whether carried out by the mobile device 5 or by the computer module 13, are the substantive steps of the room determination (room discrimination) portion of the method used by the location system of the invention.

Box (j) of Figure 4 specifies: "Beacon Representative = MAX (Average RSS Ch1, ...Average RSS ChN)", meaning that the mobile device 15, or the computer module 13, (respectively) calculates the average received signal strength (RSS) per radio frequency channel, and then selects the highest (i.e. the maximum value) average RSS, which is then designated as the representative RSS for that radio frequency unit 7 (i.e. the "Beacon Representative RSS" for that "beacon", i.e. for that RF unit 7). As indicated earlier in this specification, the average of received signal strength values may for example, be any of the following: the arithmetic mean; geometric mean; quadratic mean (root mean square, i.e. the square root of the arithmetic mean of the squares); cubic mean; harmonic mean; weighted average (i.e. weighted arithmetic mean); mode; median.

Box (k) of Figure 4 specifies: "For each Room select up to 3 Beacon Representative with highest RSS (same Room ID)", meaning that, for each room (e.g. A and B) of the building 1, the mobile device 5, or the computer module 13, (respectively) preferably selects up to three unit-representative received signal strength (RSS) values. (By "Beacon Representative" RSS is meant "unit-representative" RSS.) If there are three radio frequency units 7 in a particular room (i.e. with the same room identifier), for which the unit-representative received signal strength has been calculated, then preferably those three calculated unit-representative RSS are selected. If there are fewer than three radio frequency units 7 in a particular room, for which the unit-representative RSS has been calculated, then preferably the one or two unit-representative RSS which has/have been calculated are selected. If there are more than three radio frequency units 7 in a particular room, for which the unit-representative RSS has been calculated, then preferably the three highest (greatest calculated value) unit-representative RSS are selected.

Box (l) of Figure 4 specifies: "Room Representative = Max [Beacon Representative1, ..., Beacon RepresentativeN] + Average [Beacon Representative1, ..., Beacon RepresentativeN]*0.1875", meaning that, for each room, the mobile device 5, or the computer module 13, (respectively) calculates a room-representative received signal strength of the received beacon signals, as follows. One part of the calculation requires selecting the maximum (i.e. the greatest calculated value of) Beacon Representative RSS (i.e. the maximum value of unit-representative received signal strength) for that room. Another part of the calculation requires calculating the average of the Beacon Representative RSS selected in Box (k) for that room, and multiplying the average by a factor. The factor preferably is less than 1 and greater than zero. In a preferred implementation of the invention, the factor is chosen to be 0.1875. The final part of this calculation is to add together the results of the two calculation parts, to obtain a received signal strength value which is designated as the room-representative received signal strength value for that room (i.e. the "Room Representative" RSS for that room). As indicated earlier in this specification, the average of the unit-representative received signal strength values may for example, be any of the following: the arithmetic mean; geometric mean; quadratic mean (root mean square, i.e. the square root of the arithmetic mean of the squares); cubic mean; harmonic mean; weighted average (i.e. weighted arithmetic mean); mode; median.

Box (m) of Figure 4 specifies: "Select the Room with the highest Room Representative. This is the New Room ID", meaning that the mobile device 5, or the computer module 13, (respectively) then selects the greatest calculated value of room-representative received signal strength (RSS), as calculated for Box (I) above, and the room identifier (Room ID) of the room with that greatest room-representative RSS becomes the provisional new room location determination for the mobile device ("New Room ID"). In some implementations of the invention, the room location determination ends here, with the provisional new room location determination ("New Room ID") being designated as the room location determination for the mobile device ("Room ID"). However, in preferred implementations of the invention, the method used by the location system continues with the following process steps.

Decision Box (n) of Figure 4 specifies: "Last Room ID Valid?", meaning that the mobile device 5, or the computer module 13, (respectively) determines whether or not there is a pre-existing valid determined room location for the mobile device ("Last Room ID"). If there is a pre-existing valid room location ("Last Room ID") for the mobile device 5, this is because a room location determination for the mobile device 5 has previously been validly carried out, and "Last Room ID" has been designated (in the process step of Box (q) below) in a previous performance of the room location determination method. If there is a pre-existing valid room location determination for the mobile device 5, then the method of the location system proceeds to the process step of Box (p). If there is no pre-existing valid room location determination for the mobile device 5, then the method of the location system proceeds to the process step of Box (q). There are various possible reasons for there being no pre-existing valid room location determination for the mobile device; for example, the current room location determination procedure may be the first one to have been carried out while the mobile device 5 has been in the building (e.g. the mobile device has just been brought into the building, or has just been switched on), or a valid Last Room ID has expired after a pre-set period of time, or the mobile device has been located by another means (e.g. by GPS), or there may be an error or inconsistency in the room determination process for the mobile device.

Decision Box (p) of Figure 4 specifies: "Is Room Representative [New Room ID] > Room Representative [Last Room ID] + Room-separation factor?", meaning that the mobile device 5, or the computer module 13, (respectively) then carries out a calculation to determine whether or not the mobile device has moved rooms, as follows. This calculation requires a minimum threshold difference in calculated values (the "Room-separation factor"), to ensure that a determination that the mobile device has moved rooms is correct. This is done by comparing the current greatest calculated value of room-representative received signal strength as selected for Box (m) above (i.e. what is referred to as the "highest Room Representative" in Box (m), and what is referred to as "Room Representative [New Room ID]" in Box (p)), with the current room-representative received signal strength for the room which was determined to be the location of the mobile device in the immediately preceding room location determination process ("Room Representative [Last Room ID]"). Thus, the comparison is between two currently calculated room-representative received signal strengths as calculated in the current room location determination process (specifically, as calculated in the process step of Box (l)). If Room Representative [New Room ID] is greater by at least a predetermined amount (i.e. a "Room-separation factor") than Room Representative [Last Room ID], then the mobile device 5, or the computer module 13, (respectively) determines that the room in which the mobile device is currently located is a room (e.g. Room B) which is a different room to a room (e.g. Room A) in which the mobile device was determined to be located by the immediately preceding room location determination process. If Room Representative [New Room ID] is not greater by at least the predetermined amount than Room Representative [Last Room ID], then the mobile device 5, or the computer module 13, (respectively) determines that the mobile device is still located in the first room (e.g. Room A).

The "Room-separation factor" preferably is 9.6 dB, but other predetermined differences in RSS may be used as the Room-separation factor, depending upon the particular conditions and requirements. This requirement for such a predetermined minimum difference, namely a "Room-separation factor", before it is decided that the mobile device has moved from one room to another is intended to prevent (or at least reduce) the possibility that it is erroneously decided that the mobile device has moved rooms (when in fact it has not), e.g. due to variations in the RSS measurements. The value of 9.6dB has been found to work well in many indoor environments, but other values (which may be pre-programmed or dynamically varied) may be used.

In some implementations of the invention, the value of the difference between "Room Representative (New Room ID)" and "Room Representative (Last Room ID)" may also be used to provide a level of confidence in the room location determination decision. For example, the confidence level may be expressed as a probability of the mobile unit being located in the reported Room ID, e.g. expressed as a value between 0 and 1, preferably between 0.5 and 1. In some implementations of the invention, the probability may also be affected by other factors related to the room determination process (e.g. absolute RSS values, number of beacon signals received, etc.).

If the decision of Box (n) is that there is no valid pre-existing room identifier, or if the decision of Box (p) is that Room Representative [New Room ID] is greater by at least the predetermined amount (the "Room-separation factor") than Room Representative [Last Room ID] (i.e. that the mobile device has moved room locations), then the method of the location system proceeds to the process step of Box (q). Box (q) of Figure 4 specifies: "Set Last Room ID = New Room ID. Report Room ID = New Room ID.", meaning that: (i) the New Room ID selected in the process step of Box (m) is designated as the Last Room ID (for the purposes of the process steps of boxes (n) and (p) in the next room location determination process); and (ii) the mobile device 5, or the computer module 13, (respectively) reports that the current location of the mobile device is the New Room ID as selected in the process step of Box (m) (i.e. the provisional new room location determination of Box (m) is no longer provisional, but instead is now the reported determined current room location of the mobile device). In those implementations of the invention in which the mobile device performs the room location determination calculation, the mobile device preferably wirelessly reports this room location determination to the computer module, and the computer module thus also reports the room location determination.

If the decision of Box (p) is that Room Representative [New Room ID] is not greater by at least the predetermined amount (the "Room-separation factor") than Room Representative [Last Room ID] (i.e. that the mobile device 5 has not moved room locations), then the method of the location system proceeds to the process step of Box (r). Box (r) of Figure 4 specifies: "Report Room ID = Last Reported Room ID", meaning that the valid Last Room ID (i.e. the pre-existing valid room location determination for the mobile device 5, as set in a previous performance of the process step of Box (q)) is reported by the mobile device 5, or by the computer module 13, (respectively) as the current determined room location of the mobile device 5. As with the process step of Box (q) above, in those implementations of the invention in which the mobile device performs the room location determination calculation, the mobile device preferably wirelessly reports this room location determination to the computer module, and the computer module thus also reports the room location determination.

It will be understood that the above description and the drawings are examples of particular implementations of the invention, but that other implementations of the invention are included in the scope of the claims.

## Claims

1. An indoor location system for locating a mobile device (5), comprising at least one mobile device (5) configured to be a radio frequency receiver, and a set of RF (Radio Frequency) units (7) configured to be positioned in a plurality of rooms (A, B) in a building (1) such that a plurality of the RF units (7) is located in each room (A, B), wherein each RF unit (7) is configured to emit radio frequency beacon signals (9), each beacon signal (9) including an identifier of the emitting RF unit (7) and/or of the room (A, B) in which the RF unit (7) is located, and wherein the mobile device (5) is configured to receive at least some of the beacon signals (9) and to determine a received signal strength of each of the received beacon signals;
optionally, the mobile device (5) being configured to communicate the received signal strengths to a computer module (13) optionally connected to the RF units (7), each received signal strength communication including an identifier of the emitting RF unit (7) and/or of the room (A, B) in which the RF unit (7) is located, and including an identifier of the mobile device (5); and
**characterised in that** the mobile device (5), or the computer module (13), respectively, is configured to calculate from the received signal strengths a room-representative received signal strength for each room (A, B) from which the beacon signals have been received, and to determine which room the mobile device (5) is located in, by selecting the room (A, B) having the highest value of calculated room-representative received signal strength, wherein the mobile device (5) or the computer module (13), respectively, is configured to determine a unit-representative received signal strength for each RF unit (7), which is an average of two or more received beacon signals (9), and the mobile device (5) or the computer module (13), respectively, is configured to calculate each room-representative received signal strength, at least in part from a determination of a maximum unit-representative received signal strength and/or an average of unit-representative received signal strength values, for each room (A, B).

2. An indoor location system for locating a mobile device (5), comprising at least one mobile device (5) configured to be a radio frequency transmitter, and a set of RF (Radio Frequency) units (7) configured to be positioned in a plurality of rooms (A, B) in a building (1) such that a plurality of the RF units (7) is located in each room (A, B), wherein the mobile device (5) is configured to emit radio frequency beacon signals (9), each beacon signal (9) including an identifier of the mobile device (5), and wherein each of a plurality of the RF units (7) is configured to receive one or more of the beacon signals (9), determine their received signal strengths and communicate the received signal strengths to:
(a) the mobile device (5); or
(b) a computer module (13) optionally connected to the RF units (7), each received signal strength communication including an identifier of the mobile device (5);
wherein each received signal strength communication includes an identifier of the communicating RF unit (7) and/or of the room (A, B) in which the RF unit (7) is located; and
**characterised in that** the mobile device (5) or the computer module (13), respectively, is configured to calculate from the received signal strengths a room-representative received signal strength for each room (A, B) from which the received signal strengths have been communicated, and to determine which room (A, B) the mobile unit (5) is located in, by selecting the room (A, B) having the highest value of calculated room-representative received signal strength, wherein the mobile device (5) or the computer module (13), respectively, is configured to determine a unit-representative received signal strength for each RF unit (7), which is an average of two or more received beacon signals (9), and the mobile device (5) or the computer module (13), respectively, is configured to calculate each room-representative received signal strength, at least in part from a determination of a maximum unit-representative received signal strength and/or an average of unit-representative received signal strength values, for each room (A, B).

3. A location system according to Claim 1 or Claim 2, wherein the unit-representative received signal strength for each RF unit (7) is the highest average received signal strength of received beacon signals (9) selected from a plurality of, preferably three, average received signal strengths of received beacon signals (9), each average received signal strength being the average for a respective frequency channel.

4. A location system according to Claim 1 or Claim 2, wherein the average of unit-representative received signal strength values for each room (A, B) is an average for three units (7) in each respective room (A, B).

5. A location system according to Claim 1 or Claim 2, wherein the mobile device (5), or the computer module (13), respectively, is configured to calculate each room-representative received signal strength, at least in part by multiplying the average of unit-representative received signal strength values for that room (A, B) by a factor.

6. A location system according to Claim 5, wherein the mobile device (5), or the computer module (13), respectively, is configured to calculate each room-representative received signal strength by multiplying the average of unit-representative received signal strength values for that room (A, B) by a factor, and by adding the product thereof to the maximum unit-representative received signal strength for that room (A, B).

7. A location system according to any preceding claim, wherein the mobile device (5), or the computer module (13), respectively, is configured to determine that the mobile device (5) is located in a second room (B) which is different to that of a first room (A), which first room (A) was the location of the mobile device (5) as determined by an immediately preceding room location determination, only if the highest value of calculated room-representative received signal strength for the second room (B) is greater by at least a predetermined amount, which preferably is programmable, preferably greater by at least 9.6 dB, than the value of a currently calculated room-representative received signal strength for the first room (A).

8. A location system according to Claim 7, wherein a difference by which the value of the calculated room-representative received signal strength for the second room (B) is greater than that calculated for the first room (A) is designated as providing at least part of a level of confidence, prefereably expressed as a probability, in the room location determination.

9. A location system according to any preceding claim, wherein the mobile device (5), or each RF unit (7), respectively, is configured to emit the radio frequency beacon signals (9) periodically, preferably every predetermined fraction of a second.

10. A location system according to any preceding claim, wherein the mobile device (5), or each RF unit (7), respectively, is configured such that it functions as a radio frequency receiver, to receive the radio frequency beacon signals (9), periodically.

11. A location system according to Claim 10, wherein the mobile device (5), or each RF unit (7), respectively, is configured such that it functions as a radio frequency receiver, to receive the radio frequency beacon signals (9), every predetermined fraction of a second.

## Patentansprüche

1. Innenortungssystem zum Lokalisieren einer mobilen Vorrichtung (5), umfassend mindestens eine als Radiofrequenzempfänger konfigurierte mobile Vorrichtung (5) und einen Satz von RF-(Radiofrequenz)-Einheiten (7), die derart konfiguriert sind, dass sie in einer Mehrzahl von Räumen (A, B) in einem Gebäude (1) angeordnet sind, sodass sich eine Mehrzahl der RF-Einheiten (7) in jedem Raum (A, B) befindet, wobei jede RF-Einheit (7) konfiguriert ist, Radiofrequenz-Bakensignale (9) zu emittieren, wobei jedes Bakensignal (9) eine Kennung der emittierenden RF-Einheit (7) und/oder des Raums (A, B) aufweist, in dem sich die RF-Einheit (7) befindet, und wobei die mobile Vorrichtung (5) konfiguriert ist, mindestens einige der Bakensignale (9) zu empfangen und eine empfangene Signalstärke von jedem der empfangenen Bakensignale zu bestimmen;
wobei die mobile Vorrichtung (5) wahlweise konfiguriert ist, die empfangenen Signalstärken an ein Computermodul (13) zu übermitteln, das wahlweise mit den RF-Einheiten (7) verbunden ist, wobei jede Übermittlung von empfangenen Signalstärken eine Kennung der emittierenden RF-Einheit (7) und/oder des Raums (A, B) aufweist, in dem sich die RF-Einheit (7) befindet, und eine Kennung der mobilen Vorrichtung (5) aufweist; und
**dadurch gekennzeichnet, dass** die mobilen Vorrichtung (5) bzw. das Computermodul (13) konfiguriert sind, aus den empfangenen Signalstärken eine raumrepräsentative empfangene Signalstärke für jeden Raum (A, B) zu berechnen, aus dem die Bakensignale empfangen wurden, und zu bestimmen, in welchem Raum sich die mobile Vorrichtung (5) befindet, durch Auswählen des Raums (A, B) mit dem höchsten Wert der berechneten, raumrepräsentativen empfangenen Signalstärke, wobei die mobile Vorrichtung (5) bzw. das Computermodul (13) konfiguriert sind, eine einheitsrepräsentative empfangene Signalstärke für jede RF-Einheit (7) zu bestimmen, die ein Durchschnitt von zwei oder mehreren empfangenen Bakensignalen (9) ist, und die mobile Vorrichtung (5) bzw. das Computermodul (13) konfiguriert sind, jede raumrepräsentative empfangene Signalstärke mindestens teilweise aus einer Bestimmung einer maximalen einheitsrepräsentativen empfangenen Signalstärke und/oder einem Durchschnitt von einheitsrepräsentativen empfangenen Signalstärkenwerten für jeden Raum (A, B) zu berechnen.

2. Innenortungssystem zum Lokalisieren einer mobilen Vorrichtung (5), umfassend mindestens eine als Radiofrequenzsender konfigurierte mobile Vorrichtung (5) und einen Satz von RF-(Radiofrequenz)-Einheiten (7), die derart konfiguriert sind, dass sie in einer Mehrzahl von Räumen (A, B) in einem Gebäude (1) angeordnet sind, sodass sich eine Mehrzahl der RF-Einheiten (7) in jedem Raum (A, B) befindet, wobei die mobile Vorrichtung (5) konfiguriert ist, Radiofrequenz-Bakensignale (9) zu emittieren, wobei jedes Bakensignal (9) eine Kennung der mobilen Vorrichtung (5) aufweist und wobei die jede der Mehrzahl der RF-Einheiten (7) konfiguriert ist, ein oder mehrere der Bakensignale (9) zu empfangen, ihre empfangene Signalstärken zu bestimmen und die empfangenen Bakensignale zu übermitteln an:
(a) die mobile Vorrichtung (5); oder
(b) ein Computermodul (13), das wahlweise mit den RF-Einheiten (7) verbunden ist, wobei jede Übermittlung einer empfangenen Signalstärke eine Kennung der mobilen Vorrichtung (5) aufweist;
wobei jede Übermittlung einer empfangenen Signalstärke eine Kennung der übermittelnden RF-Einheit (7) und/oder des Raums (A, B) aufweist, in dem sich die RF-Einheit (7) befindet; und
**dadurch gekennzeichnet, dass** die mobilen Vorrichtung (5) bzw. das Computermodul (13) konfiguriert sind, aus den empfangenen Signalstärken eine raumrepräsentative empfangene Signalstärke für jeden Raum (A, B) zu berechnen, aus dem die empfangenen Signalstärken übermittelt wurden, und zu bestimmen, in welchem Raum (A, B) sich die mobile Vorrichtung (5) befindet, durch Auswählen des Raums (A, B) mit dem höchsten Wert der berechneten, raumrepräsentativen empfangenen Signalstärke, wobei die mobile Vorrichtung (5) bzw. das Computermodul (13) konfiguriert sind, eine einheitsrepräsentative empfangene Signalstärke für jede RF-Einheit (7) zu bestimmen, die ein Durchschnitt von zwei oder mehreren empfangenen Bakensignalen (9) ist, und die mobile Vorrichtung (5) bzw. das Computermodul (13) konfiguriert sind, jede raumrepräsentative empfangene Signalstärke mindestens teilweise aus einer Bestimmung einer maximalen einheitsrepräsentativen empfangenen Signalstärke und/oder einem Durchschnitt von einheitsrepräsentativen empfangenen Signalstärkenwerten für jeden Raum (A, B) zu berechnen.

3. Ortungssystem nach Anspruch 1 oder Anspruch 2, wobei die einheitsrepräsentative empfangene Signalstärke für jede RF-Einheit (7) die höchste durchschnittliche empfangene Signalstärke von empfangenen Bakensignalen (9) ist, die aus einer Mehrzahl, vorzugsweise von drei durchschnittlichen empfangenen Signalstärken von Bakensignalen (9) ausgewählt sind, wobei jede durchschnittliche empfangene Signalstärke der Durchschnitt für einen jeweiligen Frequenzkanal ist.

4. Ortungssystem nach Anspruch 1 oder Anspruch 2, wobei der Durchschnitt der einheitsrepräsentativen empfangenen Signalstärkenwerte für jeden Raum (A, B) ein Durchschnitt für drei Einheiten (7) in jedem jeweiligen Raum (A, B) ist.

5. Ortungssystem nach Anspruch 1 oder Anspruch 2, wobei die mobile Vorrichtung (5) bzw. das Computermodul (13) konfiguriert sind, jede raumrepräsentative empfangene Signalstärke mindestens teilweise durch Multiplizieren des Durchschnitts von einheitsrepräsentativen empfangenen Signalstärkenwerten für diesen Raum (A, B) um einen Faktor zu berechnen.

6. Ortungssystem nach Anspruch 5, wobei die mobile Vorrichtung (5) bzw. das Computermodul (13) konfiguriert sind, jede raumrepräsentative empfangene Signalstärke durch Multiplizieren des Durchschnitts von einheitsrepräsentativen empfangenen Signalstärkenwerten für diesen Raum (A, B) um einen Faktor und durch Addieren des Produkts davon zu der maximalen einheitsrepräsentativen empfangenen Signalstärke für diesen Raum (A, B) zu berechnen.

7. Ortungssystem nach einem der vorstehenden Ansprüche, wobei die mobile Vorrichtung (5) bzw. das Computermodul (13) konfiguriert sind, zu bestimmen, dass sich die mobile Vorrichtung (5) in einem zweiten Raum (B) befindet, der ein anderer ist als ein erster Raum (A), wobei der erste Raum (A) der Standort der mobilen Vorrichtung (5) war, der durch eine unmittelbar vorhergehende Raumstandortbestimmung bestimmt wurde, nur dann, wenn der höchste Wert einer berechneten raumrepräsentativen empfangenen Signalstärke für den zweiten Raum (B) um mindestens einen vorbestimmten Betrag, der vorzugsweise programmierbar ist, vorzugsweise um mindestens 9,6 dB, größer als der Wert einer aktuell berechneten raumrepräsentativen empfangenen Signalstärke für den ersten Raum (A) ist.

8. Ortungssystem nach Anspruch 7, wobei eine Differenz, um die der Wert der berechneten raumrepräsentativen empfangenen Signalstärke für den zweiten Raum (B) größer ist als der für den ersten Raum (A) berechnete, derart bezeichnet ist, dass sie mindestens einen Teil eines Vertrauensniveaus bereitstellt, das vorzugsweise als eine Wahrscheinlichkeit bei der Raumstandortbestimmung ausgedrückt ist.

9. Ortungssystem nach einem der vorstehenden Ansprüche, wobei die mobile Vorrichtung (5) bzw. jede RF-Einheit (7) konfiguriert ist, die Radiofrequenz-Bakensignale (9) periodisch, vorzugsweise jeden vorbestimmten Bruchteil einer Sekunde zu emittieren.

10. Ortungssystem nach einem der vorstehenden Ansprüche, wobei die mobile Vorrichtung (5) bzw. jede RF-Einheit (7) konfiguriert ist, als Radiofrequenzempfänger zu fungieren, um die Radiofrequenz-Bakensignale (9) periodisch zu empfangen.

11. Ortungssystem nach Anspruch 10, wobei die mobile Vorrichtung (5) bzw. jede RF-Einheit (7) derart konfiguriert ist, dass sie die Radiofrequenz-Bakensignale (9) periodisch, vorzugsweise jeden vorbestimmten Bruchteil einer Sekunde emittiert.

## Revendications

1. Système de localisation intérieure pour localiser un dispositif mobile (5), comprenant au moins un dispositif mobile (5) configuré pour être un récepteur radiofréquence et un ensemble d'unités RF (radiofréquence) (7) configurées pour être positionnées dans une pluralité de pièces (A, B) dans un bâtiment (1) de sorte qu'une pluralité des unités RF (7) est localisée dans chaque pièce (A, B), dans lequel chaque unité RF (7) est configurée pour émettre des signaux de balise radiofréquence (9), chaque signal de balise (9) incluant un identificateur de l'unité RF émettrice (7) et/ou de la pièce (A, B) dans laquelle l'unité RF (7) est localisée, et dans lequel le dispositif mobile (5) est configuré pour recevoir au moins certains des signaux de balise (9) et pour déterminer une intensité de signal reçu de chacun des signaux de balise reçus ;
de manière facultative, le dispositif mobile (5) étant configuré pour communiquer les intensités de signal reçu à un module informatique (13) connecté de manière facultative aux unités RF (7), chaque communication d'intensité de signal reçu incluant un identificateur de l'unité RF émettrice (7) et/ou de la pièce (A, B) dans laquelle l'unité RF (7) est localisée et incluant un identificateur du dispositif mobile (5) ; et
**caractérisé en ce que**, respectivement, le dispositif mobile (5), ou le module informatique (13) est configuré pour calculer à partir des intensités de signal reçu une intensité de signal reçu représentative de la pièce pour chaque pièce (A, B) à partir de laquelle les signaux de balise ont été reçus, et pour déterminer dans quelle pièce le dispositif mobile (5) est localisé, en sélectionnant la pièce (A, B) ayant la valeur la plus haute d'intensité calculée de signal reçu représentative de la pièce, dans lequel, respectivement, le dispositif mobile (5) ou le module informatique (13) est configuré pour déterminer une intensité de signal reçu représentative de l'unité pour chaque unité RF (7), qui est une moyenne de deux ou plusieurs signaux de balise reçus (9), et respectivement le dispositif mobile (5) ou le module informatique (13) est configuré pour calculer chaque intensité de signal reçu représentative de la pièce, au moins en partie à partir d'une détermination d'une intensité maximale de signal reçu représentative de l'unité et/ou d'une moyenne de valeurs d'intensité de signal reçu représentatives de l'unité, pour chaque pièce (A, B).

2. Système de localisation intérieure pour localiser un dispositif mobile (5), comprenant au moins un dispositif mobile (5) configuré pour être un émetteur radiofréquence et un ensemble d'unités RF (radiofréquence) (7) configurées pour être positionnées dans une pluralité de pièces (A, B) dans un bâtiment (1) de sorte qu'une pluralité des unités RF (7) sont localisées dans chaque pièce (A, B), dans lequel le dispositif mobile (5) est configuré pour émettre des signaux de balise radiofréquence (9), chaque signal de balise (9) incluant un identificateur du dispositif mobile (5), et dans lequel chacune d'une pluralité des unités RF (7) est configurée pour recevoir un ou plusieurs des signaux de balise (9), déterminer leurs intensités de signal reçu et communiquer les intensités de signal reçu :
(a) au dispositif mobile (5) ; ou
(b) à un module informatique (13) connecté de manière facultative aux unités RF (7), chaque communication d'intensité de signal reçu incluant un identificateur du dispositif mobile (5) ;
dans lequel chaque communication d'intensité de signal reçu inclut un identificateur de l'unité RF communicante (7) et/ou de la pièce (A, B) dans laquelle l'unité RF (7) est localisée ; et
**caractérisé en ce que** respectivement le dispositif mobile (5) ou le module informatique (13) est configuré pour calculer à partir des intensités de signal reçu une intensité de signal reçu représentative de la pièce pour chaque pièce (A, B) à partir de laquelle les intensités de signal reçu ont été communiquées, et pour déterminer dans quelle pièce (A, B) l'unité mobile (5) est localisée, en sélectionnant la pièce (A, B) ayant la valeur la plus haute d'intensité calculée de signal reçu représentative de la pièce, dans lequel respectivement le dispositif mobile (5) ou le module informatique (13) est configuré pour déterminer une intensité de signal reçu représentative de l'unité pour chaque unité RF (7), qui est une moyenne de deux ou plusieurs signaux de balise reçus (9), et respectivement le dispositif mobile (5) ou le module informatique (13) est configuré pour calculer chaque intensité de signal reçu représentative de la pièce, au moins en partie à partir d'une détermination d'une intensité maximale de signal reçu représentative de l'unité et/ou d'une moyenne de valeurs d'intensité de signal reçu représentatives de l'unité, pour chaque pièce (A, B).

3. Système de localisation selon la revendication 1 ou la revendication 2, dans lequel l'intensité de signal reçu représentative de l'unité pour chaque unité RF (7) est l'intensité de signal reçu moyenne la plus haute de signaux de balise reçus (9) sélectionnés à partir d'une pluralité, de préférence trois, d'intensités de signal reçu moyennes de signaux de balise reçus (9), chaque intensité de signal reçu moyenne étant la moyenne pour un canal de fréquence respectif.

4. Système de localisation selon la revendication 1 ou la revendication 2, dans lequel la moyenne des valeurs d'intensité de signal reçu représentatives de l'unité pour chaque pièce (A, B) est une moyenne pour trois unités (7) dans chaque pièce respective (A, B).

5. Système de localisation selon la revendication 1 ou la revendication 2, dans lequel respectivement le dispositif mobile (5) ou le module informatique (13) est configuré pour calculer chaque intensité de signal reçu représentative de la pièce, au moins en partie en multipliant par un coefficient la moyenne de valeurs d'intensité de signal reçu représentatives de l'unité pour cette pièce (A, B).

6. Système de localisation selon la revendication 5, dans lequel respectivement le dispositif mobile (5) ou le module informatique (13) est configuré pour calculer chaque intensité de signal reçu représentative de la pièce en multipliant par un coefficient la moyenne de valeurs d'intensité de signal reçu représentatives de l'unité pour cette pièce (A, B) et en ajoutant le produit de ceux-ci à l'intensité maximale de signal reçu représentative de l'unité pour cette pièce (A, B).

7. Système de localisation selon l'une quelconque des revendications précédentes, dans lequel respectivement le dispositif mobile (5) ou le module informatique (13) est configuré pour déterminer que le dispositif mobile (5) est localisé dans une seconde pièce (B), lequel est différent de celui d'une première pièce (A), laquelle première pièce (A) était la localisation du dispositif mobile (5) telle que déterminée par une détermination de localisation de pièce immédiatement précédente, seulement si la valeur la plus haute d'intensité calculée de signal reçu représentative de la pièce pour la seconde pièce (B) est plus grande d'au moins une quantité prédéterminée, qui est de préférence programmable, de préférence supérieure d'au moins 9,6 dB, à la valeur d'une intensité couramment calculée de signal reçu représentative de la pièce pour la première pièce (A).

8. Système de localisation selon la revendication 7, dans lequel une différence par laquelle la valeur de l'intensité calculée de signal reçu représentative de la pièce pour la seconde pièce (B) est plus grande que celle calculée pour la première pièce (A) est désignée comme fournissant au moins une partie d'un niveau de confiance, exprimée de préférence comme une probabilité, dans la détermination de localisation de pièce.

9. Système de localisation selon l'une quelconque des revendications précédentes, dans lequel respectivement le dispositif mobile (5) ou chaque unité RF (7) est configuré pour émettre les signaux de balise radiofréquence (9) périodiquement, de préférence à chaque fraction prédéterminée d'une seconde.

10. Système de localisation selon l'une quelconque des revendications précédentes, dans lequel respectivement le dispositif mobile (5) ou chaque unité RF (7) est configuré de sorte qu'il fonctionne comme un récepteur radiofréquence, pour recevoir périodiquement les signaux de balise radiofréquence (9).

11. Système de localisation selon la revendication 10, dans lequel respectivement le dispositif mobile (5) ou chaque unité RF (7) est configuré de sorte qu'il fonctionne comme un récepteur radiofréquence, pour recevoir les signaux de balise radiofréquence (9), à chaque fraction prédéterminée d'une seconde.
